# EUROPÄISCHE PATENTSCHRIFT

(11) **EP 2 588 406 B1**
(45) Veröffentlichungstag und Bekanntmachung des Hinweises auf die Patenterteilung: **03.01.2018**
(21) Anmeldenummer: 11738638.3
(22) Anmeldetag: 22.06.2011
(51) Int. Cl.: F22B 37/02, F01K 23/06, F22B 1/22, C01B 7/01

(54) **VORRICHTUNG ZUR HCL-SYNTHESE MIT DAMPFERZEUGUNG**
APPARATUS FOR HCL SYNTHESIS WITH STEAM RAISING
DISPOSITIF DE SYNTHÈSE DE HCL AVEC PRODUCTION DE VAPEUR

(30) Priorität: 01.07.2010 DE 102010030832
(43) Veröffentlichungstag der Anmeldung: 08.05.2013
(73) Patentinhaber: SGL Carbon SE, 65201 Wiesbaden (DE)
(72) Erfinder: FRANZ, Marcus, 86830 Schwabmünchen (DE); GÖTZ, Sören, 63796 Kahl (DE)
(86) Internationale Anmeldenummer: PCT/EP2011/060413
(87) Internationale Veröffentlichungsnummer: WO 2012/000859

(56) Entgegenhaltungen:
- DE-A1- 2 317 024
- DE-A1- 3 313 761
- DE-A1- 3 807 264
- DE-C- 857 343
- US-A1- 2008 223 315

## Beschreibung

Die Erfindung betrifft eine Vorrichtung zur HCl-Synthese mit Dampferzeugung, bei der als Ausgangsstoffe Chlor und Wasserstoff oder Chlor und Kohlenwasserstoffe eingesetzt werden. Gegebenenfalls können auch HCl-Anteile, Luft bzw. inerte Bestandteile in den Ausgangsstoffen enthalten sein. Der Syntheseofen und der nachgeschaltete Wärmeaustauscher zur Produktabkühlung sind Teile eines Dampferzeugers.

Üblicherweise werden Großwasserraumkessel für die Dampferzeugung mit fossilen Brennstoffen verwendet. Als Brennstoff dienen dazu mehrheitlich kohlenwasserstoffhaltige Gase, wie beispielsweise Erdgas oder kohlenwasserstoffhaltiges Öl, wie beispielsweise Heizöl. Auch die Befeuerung mit festen Brennstoffen wie Steinkohle ist seit langem bekannt. Normalerweise kommt es hier zu Verbrennungstemperaturen von 700 °C bis maximal etwa 1500 °C.

Es ist Stand der Technik, dass Wärme auch aus chlorwasserstoffhaltigen Rauchgasen mittels eines Dampferzeugers ausgekoppelt wird, allerdings bei Flammrohr- und Wasserrohrkesseln unter ganz anderen Bedingungen als nachfolgend beschrieben.

Üblicherweise wird zunächst die vollständige Abreaktion der Edukte mit feuerfestem Material ausgemauerten und isolierten Stahlbrennkammern bewerkstelligt. Es handelt sich also nicht um einen Flammrohrkessel im hier gemeinten Sinn, sondern um einen nachgeschalteten Kessel. Zudem wird die Temperatur vorzugsweise bei maximal 1250 °C festgehalten, beispielsweise durch gezielte Zugabe von Kühlmedien, wie beispielsweise Dampf, Wasser oder Inertgas.

Die Herstellung von Chlorwasserstoff aus Chlor und Wasserstoff oder wasserstoffhaltigen Verbindungen erfolgt in gekühlten Syntheseapparaten, die beispielsweise aus korrosionsbeständigen Werkstoffen, wie kunstharzimprägniertem Graphit, gefertigt sind. Das gebildete Chlorwasserstoffgas wird anschließend gekühlt und in den meisten Fällen in einem integrierten oder nachgeschalteten Absorber in Wasser absorbiert, wobei sich Salzsäure bildet.

Chlor und Wasserstoff werden dabei in speziellen Brennkammern in einer Flamme zur Reaktion gebracht. Die Reaktionswärme (ca. 92 kJ/mol HCl) wird über die gekühlten Wände des Reaktionsraumes und mittels integrierten oder außerhalb liegenden Wärmeaustauschern abgekühlt.

Zum Zwecke der Energieeinsparung ist es erstrebenswert, die bei einem solchen Prozess entstehende Reaktionswärme wirtschaftlich zu nutzen, wobei die Erzeugung von Dampf aus technischer Sicht bevorzugt wird.

Die chinesische Patentschrift 93110518.8 beschreibt eine Schaltungsvariante, bei der die Reaktionswärme zum einen Teil über die Wand des Syntheseofens und zum anderen Teil aus der weiteren Abkühlung der Reaktionsgase zur Erzeugung von Dampf genutzt werden. Für eine gute Wärmenutzung müssen mehrere Wärmetauscher vorgeschaltet werden. Als Korrosionsschutz für den Syntheseofen soll eine nicht näher beschriebene wärmeleitende und korrosionsbeständige Beschichtung dienen.

In der chinesischen Patentschrift No. 2007200968895.9 wird eine Vorrichtung zur Erzeugung von Chlorwasserstoff mit Dampferzeugung beschrieben, bei welcher der Syntheseofen innerhalb eines Dampfkessels angeordnet ist. Der Syntheseofen besteht aus Graphit. Der Dampfkessel hat einen äußeren Zirkulationskreislauf, ähnlich einem Naturumlaufverdampfer. Mit dieser Vorrichtung soll es möglich sein, Dampf mit einem Druck von 0,1 bis 0,2 MPa zu erzeugen.

In der Patentschrift DE 3807264 ist eine Vorrichtung beschrieben, die aus einem Brenner, einer Brennkammer und einem innen liegenden Wärmeaustauscher besteht. Diese Bauteile werden von Druckwasser durchströmt, welches die Reaktionswärme aufnimmt und in einem außerhalb der eigentlichen Verbrennungsanlage befindlichen Dampferzeuger seine Wärme abgibt. Die Temperatur des Kühlmittelkreislaufes soll bei Drücken von 9 bis 27 bar Temperaturen von 170 bis 230 °C aufweisen. Mit dieser Anlage soll Sattdampf mit wenigstens 7 bar erzeugt werden.

Die Patentschrift DE 857 343 C zeigt eine Vorrichtung zur Herstellung von Chlorwasserstoffgas mit integrierter Rückgewinnung. Die Brennkammer, in welcher ein Brenner platziert ist, und der Wärmetauscher befinden sich in einer Dampftrommel und arbeiten nach dem Abhitzekesselprinzip.

Die Offenlegungsschrift DE 23 17 024 A1 offenbart einen Chlorverbrennungsofen zur Gewinnung von Chlorwassertoffgas und wässriger Salzsäure mit einer hohlzylindrischen von einem Stahlmantel umschlossenen, aus Graphitblöcken bestehenden Brennkammer und Vorrichtungen zum Kühlen der Graphitblöcke.

Die Konstruktion als Wasserrohrkessel ist aufwendig und komplex (z.B. Fertigungstoleranzen), also kostenintensiv, und hat ferner die folgenden Nachteile:
1. Unter praktischen Einsatzbedingungen kann eine Ungleichverteilung des siedenden Gemisches zum Leidenfrost-Effekt in den Rohren und letztlich durch lokale Überhitzung der Rohrwand zu Korrosion und geringen Standzeiten führen. Diese Problematik besteht unabhängig davon, ob der Verdampfer im Naturumlauf oder im Zwangumlauf betrieben wird.
2. Eine Ausführung mit Thermalöl als Wärmeträgermedium ist problematisch. Einerseits lässt sich auch hier eine Ungleichverteilung und Überhitzung der Rohrwand und des Öls nicht vermeiden, andererseits muss aus Umweltgesichtspunkten die Syntheseanlage in eine Wanne gestellt werden.
3. Der Wirkungsgrad getrennter Wärmeträgerkreisläufe zur Wärmeauskopplung ist immer schlechter als die Direktverdampfung.
4. Der Stand der Technik zeichnet sich durch eine ungenügende Wärmekopplung aus, da das Produktgas HCl nur auf ca. 1000 °C abgekühlt wird. Dadurch bleibt wertvolle Energie ungenutzt.

Stand der Technik ist also die Wärmeauskopplung aus HCl-haltigen Gasen, bis 70% HCl, mittels nachgeschalteter Dampfkesselanlagen und einer Temperatur von maximal 1250 °C.

Die beiden Maßnahmen sind notwendig, um eine Korrosion der Stahl-Dampferzeuger zu verhindern, insbesondere Hochtemperaturkorrosion.

Aufgabe ist es, eine Vorrichtung zur Verfügung zu stellen, die eine zuverlässige, effektive Direktverdampfung von Wasser ermöglicht, indem hierzu die Wärme der exothermen Reaktion von Chlor und Wasserstoff ausgekoppelt wird.

Diese Aufgabe wird durch die erfindungsgemäße Vorrichtung zur Durchführung eines Verfahrens zur Chlorwasserstoffsynthese aus Chlor und Wasserstoff oder aus Chlor und Kohlenwasserstoffen gemäß Anspruch 1 gelöst, die mit integrierter Wärmerückgewinnung arbeitet und die Flammrichtung des Flammrohrs von unten nach oben betreibbar ist. Die weiteren Bauteile sind sinngemäß anzuordnen.
Bei der vorliegenden Erfindung sind das Flammrohr und die Brennkammer derselbe Apparat. Zusätzlich kann in der Brennkammer eine adiabate Verbrennungstemperatur von bis zu 2400 °C zugelassen werden, ohne dass Korrosion am Dampferzeugnis auftritt.

Dazu wird erfindungsgemäß ein spezieller H₂-Cl₂-Diffusionsbrenner konzentrisch in das vorgesehene Flammrohr platziert.

Dabei sind sowohl die Brennkammer als auch der Wärmeaustauscher in der Dampftrommel eines Großwasserraumkessels angeordnet, der nach dem Abhitzekesselprinzip arbeitet.

Die erfindungsgemäße Brennkammer ist bevorzugt mit einem höheren oder niedrigerem Innendruck gegenüber dem Druck außerhalb der Brennkammer betreibbar. Die Brennkammer ist dabei so ausgelegt, dass die HCl-Synthese vorzugsweise in einem Druckbereich von 0,1 bar (abs.) bis 7,0 bar (abs.) betrieben werden kann, weiter bevorzugt in einem Druckbereich von 0,8 bar (abs.) bis 5,0 bar (abs.), besonders bevorzugt in einem Druckbereich von 0,9 bar (abs.) bis 4,0 bar (abs.).

Alle erfindungsgemäßen chlorwasserstoffberührten Teile sind ständig in einem Temperaturbereich, innerhalb dessen die Korrosion gering ist, weil sich diese Teile alle innerhalb der Dampftrommel befinden, die auf einem Temperaturniveau betrieben wird, in dem die Korrosion, z.B. auch bei wasserdampfhaltigen Gemischen, gering ist.

Bevorzugt besteht der Großwasserraumkessel aus einem Flammrohr, Wendekammern und nachfolgenden Rohrbündel-Wärmeüberträgern, welche in einem Kesselkörper eingebaut sind

Zwischen Kesselwand und Wärmeaustauscherrohren befinden sich besonders bevorzugt Leitorgane, die eine gleichmäßige Zirkulation des Wassers im Kessel sicherstellen. Brennkammer, Wärmeaustauscherrohre und Leitorgane können so angeordnet sein, dass die Zirkulation des umgebenden Wassers und das Aufsteigen des Dampfes sichergestellt werden (freie Konvektion). Hierbei wird keine Umlaufpumpe benötigt.

Bevorzugt können die Produktkühlrohre nach oben in den Dampfraum geführt werden, so dass eine Überhitzung (Trocknung) des erzeugten Dampfes möglich ist. Eine Überhitzung des Dampfes ist vorzugsweise auch dadurch zu realisieren, dass Dampf mit einem Druck höher als der Netzdruck erzeugt wird und dann in das Netz entspannt wird.

Vorzugsweise bestehen die Brennkammer und der nachgeschaltete Wärmeaustauscher zur Produktabkühlung aus einem metallischen Werkstoff und sind Teile eines Dampferzeugers.

Besonders bevorzugt bestehen die Brennkammer und der nachgeschaltete Wärmeaustauscher zur Produktabkühlung aus Stahl und sind Teile eines Dampferzeugers.

Bevorzugt sind die Brennkammer, der Wärmeaustauscher und die Dampftrommel exzentrisch angeordnet. Generell ist aber auch eine handelsübliche Anordnung bevorzugt.

Es ist besonders bevorzugt, dass an der Mündungsöffnung des Flammrohres der HCl-Synthesebrenner vorgesehen ist.

Vorzugsweise ist die erfindungsgemäße Brennkammer mit einer Beschichtung auf Silazan-Basis gegen Korrosion geschützt. Dadurch wird die Lebensdauer der Brennkammer (Flammrohr) deutlich verlängert.

Zudem ist bevorzugt, dass die Brennkammer mit einem Auftragschweißverfahren vor Korrosion geschützt wird. Als Schweißmittel dienen dabei Nickelbasislegierungen oder andere, handelsübliche Schweißmittel mit erhöhter Korrosionsfestigkeit. Besonders bevorzugt können auch Nickel selbst oder Tantal verwendet werden. Diese werden nach dem sgn. Cladding-Verfahren, einem besonderen Auftragsschweißverfahren aufgebracht.

Eine weitere Variante zum Schutz der Brennkammer ist die Beschichtung derselben mit Keramischen Schutzschichten. Überraschenderweise haben diese einen positiven Effekt auf die Lebensdauer der Brennkammer, obwohl diesen nicht Gasdicht ausgeführt werden können. Der Grund hierfür muss also die isolierende bzw. wärmerückstrahlende Eigenschaft der Beschichtung sein. Besonders bevorzugt wird diese keramische, nicht absolut gasdichte Beschichtung an vorher bestimmten, besonders temperaturbeanspruchten Bereichen angebracht, um einerseits deren Überhitzung und andererseits um eine bessere Wärmelastverteilung auf die gesamte Brennerkammerinnenwand zu erreichen. Als keramische Beschichtungen können dabei metallische Oxide, Boride und Karbide verwendet werden. Diese werden bevorzugt durch Plasmaspritzen aufgebracht. Mit letztgenanntem Auftragsverfahren können aber auch hochschmelzende, besonders in Chloratmosphären widerstandsfähige, Metalle und Metall-Legierungen aufgebracht werden.

Selbstverständlich kann ein derartiger wirksamer, aber v.a. auch auf Gasdichtheit beruhender, Korrosionsschutz erreicht werden, wenn Schmelzen auf die Innenseite korrosionsgefährdeten Bauteile aufgebracht werden. Eine besonders wirksam einsetzbare Schmelze ist z.B. Emaille.

Es ist ferner bevorzugt, dass Dampf zur Aufheizung des Kesselraumes oder Gasfeuerung zur Aufheizung des Brennkammerraumes verwendet wird, um Korrosion zu verhindern.

Die Betriebstemperatur des Verdampfers liegt zwischen 170 and 240 °C. Erfindungsgemäß wird das HCl-Produktgas auf 200-1200 °C, bevorzugt auf 200-500 °C und besonders bevorzugt auf 250-350 °C abgekühlt. Damit ist eine gute Wärmenutzung möglich.

Im Vergleich zu mit Druckwasser beheizten außen liegenden Verdampfern ist erfindungsgemäß ein höherer Wirkungsgrad möglich (Temperaturdifferenz zwischen Kreislaufwasser und Verdampfer entfällt) und die Anlage wird dadurch erheblich kostengünstiger.

Besonders bevorzugt ist es, dass das Flammrohr gewellt ist, so dass der konvektive Wärmeübertragungsanteil auf der dem Kessel zugewandten Seite erhöht wird.

Die Brennkammer und der Wärmeaustauscher können erfindungsgemäß druckstoßfest ausgeführt werden, d.h. sie halten Drücken stand, die bei der Zündung von beliebigen Gemischen aus Wasserstoff und Chlor entstehen können.

Zur Inbetriebnahme der Vorrichtung kann diese mit einem Hilfsbrenner oder mit Dampf aus dem Netz vorgewärmt bzw. auf Betriebstemperatur gebracht werden.

Eine Leckageüberwachung ist mittels Messung des Wasserdampfdruckes im Produkt möglich. Die Betriebsweise der erfindungsgemäßen Vorrichtung ist sicher, da Leckagen nur in Richtung der Produktseite zu erwarten sind. Zusätzlich kann die Leckage über den Druckabfall im Dampfsystem ermittelt werden.

Zur frühzeitigen Erkennung kritischer Korrosionsraten wird in die erfindungsgemäße Vorrichtung bevorzugt eine modifizierte Korrosionsmesssonde in den Brennraum eingebaut. Prinzip einer solchen Sonde ist es, dass ein mit dem Verdampfer identischer Werkstoff kontrolliert bei den vorherrschenden Brennraumbedingungen zur Korrosion gebracht wird und mittels der damit verbundenen Widerstandsänderung auf den Korrosionsfortschritt geschlossen wird. So wird bei Bedarf rechtzeitig die Brennkammer gewartet, und es tritt kein unerwartetes Schadensereignis ein.

Die Erfindung wird nachfolgend anhand von schematischen nicht maßstäblichen Zeichnungen weiter erläutert. Es zeigen
Fig. 1 eine Vorrichtung zur Durchführung des erfindungsgemäßen Verfahrens, wobei die Wendekammer des Großwasserraumkessels mit einem nachfolgenden einseitigen Rohrregister versehen ist.
Fig. 2 eine Vorrichtung zur Durchführung des erfindungsgemäßen Verfahrens, wobei die Wendekammer des Großwasserraumkessels mit einem nachfolgenden konzentrischen Rohrregister versehen ist.

Die Vorrichtung zur Durchführung des Verfahrens ist ein Großwasserraumkessel, der nach dem Abhitzekesselprinzip arbeitet. Dieser verfügt über einen Kesselkörper mit Außenmantel (11) und ein innenliegendes Flammrohr, welches die Brennkammer umschließt.

An der Mündungsöffnung des Flammrohres (12) befindet sich ein HCl-Synthesebrenner (1), der mit einem Gaseintritt für Wasserstoff (14) und mit einem Gaseintritt (15) für Chlor versehen ist. Begrenzt wird die Brennkammer, die beispielsweise aus Stahl besteht und mit einer korrosionsbeständigen Beschichtung ausgeführt sein kann, von der Brennkammerwand (12). An der Brennkammerwand (12) ist im Bereich des Kesselraums (9) eine modifizierte Korrosionsmesssonde (10) in den Brennraum eingebaut.

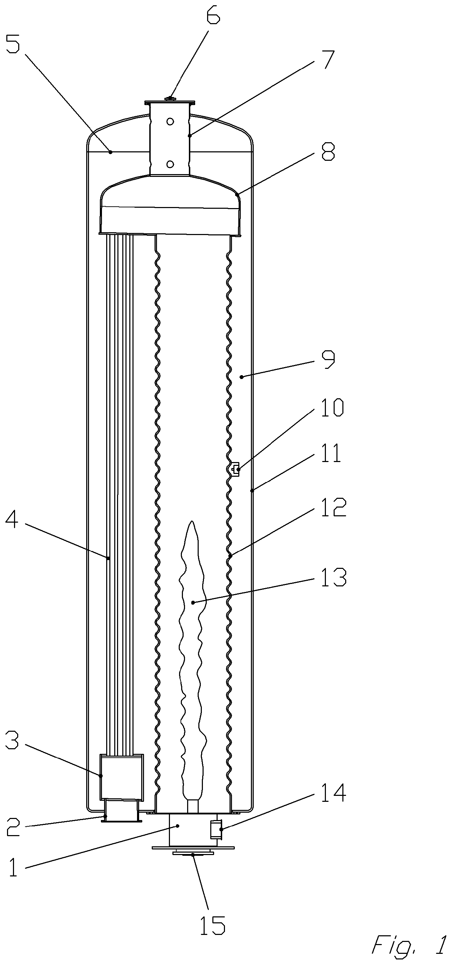

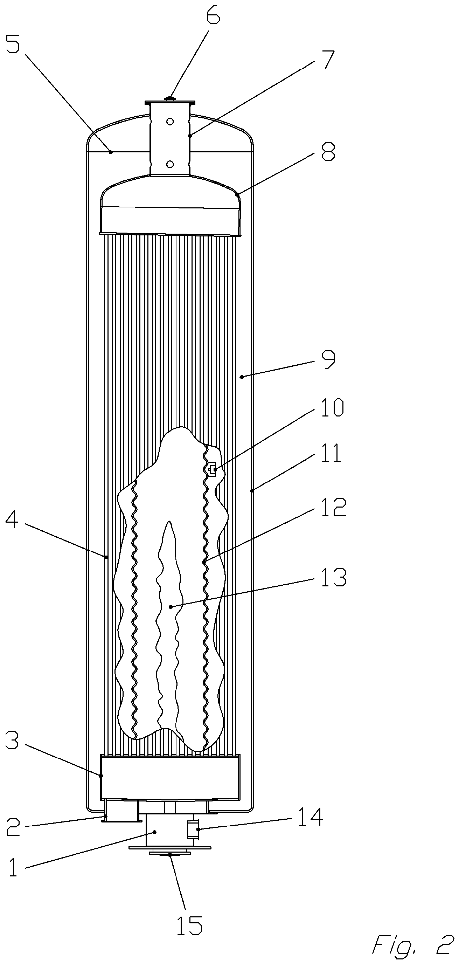

Die Flammrichtung der Flamme (13) ist von unten nach oben dargestellt. Über der Flamme (13) befindet sich die Wendekammer (8) mit aufgeschweißtem Dampfsammler (7), der mit einem Dampfaustritt (6) versehen ist. Die Wendekammer (8) ist vollständig von Kesselwasser umschlossen. Der Kesselwasserstand (5) ist dargestellt. Die Wendekammer (8) ist mit einem nachfolgenden Rohrregister (4) versehen, welches entweder einseitig, wie in Figur 1, oder konzentrisch, wie in Figur 2 gezeigt, ausgeführt sein kann. Das im Rohrregister bis auf 250-280°C abgekühlte HCl Produktgas wird in einem anschließenden Sammler (3) gesammelt und durch den Produktaustritt (2) abgegeben.

## Patentansprüche

1. Vorrichtung zur Durchführung eines Verfahrens zur Chlorwasserstoffsynthese aus Chlor und Wasserstoff oder aus Chlor und Kohlenwasserstoffen mit integrierter Wärmerückgewinnung, **dadurch gekennzeichnet, dass** Flammrohr und Brennkammer derselbe Apparat sind, in welchem ein H₂Cl₂-Diffusionsbrenner konzentrisch in das Flammrohr platziert ist, wobei die Brennkammer mit einem Wärmeaustauscher in der Dampftrommel eines Großwasserraumkessels angeordnet ist, der nach dem Abhitzekesselprinzip arbeitet, und dass sich über der Flamme eine Wendekammer mit aufgeschweißtem Dampfsammler befindet, der mit einem Dampfaustritt versehen ist, und dass die Flammrichtung des Flammrohrs von unten nach oben betreibbar ist.

2. Vorrichtung nach Anspruch 1, **dadurch gekennzeichnet, dass** der Großwasserraumkessel aus dem Flammrohr bzw. Brennkammer sowie aus Wendekammern und nachfolgenden Rohrbündel-Wärmeüberträgern besteht, welche in einem Kesselkörper eingebaut sind.

3. Vorrichtung nach einem oder mehrerer der vorangehenden Ansprüche, **dadurch gekennzeichnet, dass** die Brennkammer und der Wärmeaustauscher aus einem metallischen Werkstoff bestehen.

4. Vorrichtung nach einem oder mehrerer der vorangehenden Ansprüche, **dadurch gekennzeichnet, dass** die Brennkammer und der Wärmeaustauscher aus Stahl bestehen.

5. Vorrichtung nach Anspruch 1, **dadurch gekennzeichnet, dass** die Brennkammer mit einer Beschichtung auf Silazan-Basis gegen Korrosion geschützt ist.

6. Vorrichtung nach einem oder mehrerer der vorangehenden Ansprüche, **dadurch gekennzeichnet, dass** die Brennkammer, der Wärmeaustauscher und die Dampftrommel exzentrisch angeordnet sind.

7. Vorrichtung nach einem oder mehrerer der vorangehenden Ansprüche, **dadurch gekennzeichnet, dass** das Flammrohr gewellt ist.

8. Vorrichtung nach einem oder mehrerer der vorangehenden Ansprüche, **dadurch gekennzeichnet, dass** eine modifizierte Korrosionsmesssonde in den Brennraum eingebaut ist.

## Claims

1. Device for carrying out a process for hydrogen chloride synthesis from chlorine and hydrogen or from chlorine and hydrocarbons, having integrated heat recovery, **characterised in that** the flue and the combustion chamber are the same apparatus, in which method a H₂Cl₂ diffusion burner is concentrically placed into the flue, the combustion chamber and a heat exchanger being arranged in the steam drum of a fire-tube boiler which operates according to the waste-heat boiler principle, and **in that** a reversal chamber having a wielded-on steam header is located above the flame, which steam header is provided with a steam outlet, and **in that** the flame direction of the flue can be operated from the bottom upwards.

2. Device according to claim 1, **characterised in that** the fire-tube boiler consists of the flue and combustion chamber, reversal chambers, and subsequent shell and tube heat exchangers which are built into a boiler body.

3. Device according to one or more of the preceding claims, **characterised in that** the combustion chamber and the heat exchanger consist of a metal material.

4. Device according to one or more of the preceding claims, **characterised in that** the combustion chamber and the heat exchanger consist of steel.

5. Device according to claim 1, **characterised in that** the combustion chamber is protected against corrosion by means of a silazane-based coating,

6. Device according to one or more of the preceding claims, **characterised in that** the combustion chamber, the heat exchanger and the steam drum are eccentrically arranged.

7. Device according to one or more of the preceding claims, **characterised in that** the flue is corrugated.

8. Device according to one or more of the preceding claims, **characterised in that** a modified corrosion measurement probe is built into the combustion space.

## Revendications

1. Dispositif permettant la mise en oeuvre d'un procédé de synthèse de chlorure d'hydrogène à partir de chlore et d'hydrogène ou à partir de chlore et d'hydrocarbures avec récupération intégrée de la chaleur, **caractérisé en ce que** le tube foyer et la chambre de combustion correspondent au même appareil, dans lequel un brûleur diffuseur de H₂Cl₂ est placé concentriquement dans le tube foyer, fa chambre de combustion avec échangeur de chaleur étant située dans le tambour à vapeur d'une chaudière à grand volume d'eau qui fonctionne selon le principe de la chaudière à récupération, et **en ce qu'**une chambre de reflux avec collecteur de vapeur soudé, doté d'une sortie vapeur, se trouve au-dessus de la flamme, et **en ce que** la direction des flammes du tube foyer est utilisable du bas vers le haut.

2. Dispositif selon la revendication 1, caractérisé en que la chaudière à grand volume d'eau est constituée du tube foyer ou de la chambre de combustion ainsi que de chambres de reflux et des échangeurs à faisceau tubulaire suivants, lesquels sont intégrés dans un corps de chaudière.

3. Dispositif selon une ou plusieurs des revendications précédentes, **caractérisé en ce que** la chambre de combustion et l'échangeur de chaleur sont constitués d'un matériau métallique.

4. Dispositif selon une ou plusieurs des revendications précédentes, **caractérisé en ce que** la chambre de combustion et l'échangeur de chaleur sont constitués d'acier.

5. Dispositif selon la revendication 1, **caractérisé en ce que** la chambre de combustion est protégée par un revêtement à base de silazane.

6. Dispositif selon une ou plusieurs des revendications précédentes, **caractérisé en ce que** la chambre de combustion, l'échangeur de chaleur et le tambour à vapeur sont disposés de manière excentrique.

7. Dispositif selon une ou plusieurs des revendications précédentes, **caractérisé en ce que** le tube foyer est ondulé.

8. Dispositif selon une ou plusieurs des revendications précédentes, **caractérisé en ce qu'**une sonde de mesure de la corrosion modifiée est intégrée dans la chambre de combustion.
